# EUROPEAN PATENT APPLICATION

(11) **EP 4 722 414 A1**
(43) Date of publication of application: **08.04.2026**
(21) Application number: 24815028.6
(22) Date of filing: 22.04.2024
(51) Int. Cl.: C23F 11/14, C02F 5/00, C02F 5/10, C23F 11/167, C23F 11/18

(54) **METHOD FOR PREVENTING CORROSION OF METAL MEMBER**

(30) Priority: 01.06.2023 JP 2023091035
(71) Applicant: Kurita Water Industries Ltd., Tokyo 164-0001 (JP)
(72) Inventor: KASHIWAGI, Shogo, Tokyo 164-0001 (JP); MORI, Shintarou, Tokyo 164-0001 (JP); FUJITA, Kazuhisa, Tokyo 164-0001 (JP)
(74) Representative: TBK
(86) International application number: PCT/JP2024/015702
(87) International publication number: WO 2024/247541

(57) **Abstract**

Provided is a method for preventing corrosion of metal component in which cooling water and steam alternately contact, in which a phosphorus compound and/or a zinc compound is added to the cooling water and a corrosion-resistant film forming substance is added to the steam. The phosphorus compound is at least one of hexametaphosphoric acid, tripolyphosphoric acid, orthophosphoric acid, phosphonobutanetricarboxylic acid, hydroxyethylidene diphosphonic acid (HEDP), and aminotrimethylphosphonic acid.

## Description

### Technical Field

The present invention relates to a method for preventing corrosion of metal component, and particularly relates to a method for preventing corrosion of metal component such as reaction vessels and molding machines in which steam and cooling water alternately contact.

### Related Art

In order to inhibit corrosion of carbon steel heat exchangers and piping in open circulating cooling water systems, phosphorus compounds such as orthophosphate, hexametaphosphate, hydroxyethylidene phosphonate, phosphonobutane tricarboxylate, and the like, and zinc salts or dichromates may be added to cooling water alone or in combination (Patent Document 1).

In the case of adding the above-mentioned corrosion inhibitors to cooling water for corrosion prevention of metal components such as reaction vessels in which steam and cooling water alternately contact, the cooling water is diluted by steam and the corrosion inhibitor concentration decreases, such that metal corrosion cannot be sufficiently inhibited.

Patent Document 1 discloses a metal corrosion inhibition method for water systems in which low concentrations of phosphate and zinc salt (each 1 mg/L or less) and an M alkalinity component are added to the water system, such that the Langelier index at 30°C is 1.2 or more. However, in reaction vessels and the like in which steam and cooling water alternately contact, the cooling water is diluted by steam and the concentration of the M alkalinity component becomes low, so sufficient corrosion prevention is difficult. In addition, in the case of the reaction vessel being heated by steam, the reaction vessel becomes high temperature and exceeds the specification temperature of the cooling water system corrosion inhibitor, so sufficient corrosion prevention cannot be achieved.

For corrosion inhibition of carbon steel, there is also a method using long-chain aliphatic amine, which is one of the film forming substances (Patent Document 2). The mechanism of corrosion prevention by long-chain aliphatic amine is that the long-chain aliphatic amine adsorbs to the metal surface via amino groups to form a dense film of monomolecular or multimolecular layers, thereby preventing contact between metal and water and inhibiting metal corrosion.

In the corrosion prevention method using long-chain aliphatic amine, the adsorbed film will peel off unless long-chain aliphatic amine is continuously added to the water system. Therefore, even in the case of applying the corrosion prevention method using long-chain aliphatic amine to corrosion prevention of metal components in which cooling water and steam alternately contact, sufficient corrosion prevention effect cannot be obtained.

### Citation List

### Patent Literature

Patent Document 1: Japanese Patent Application Laid-Open Publication No. 2009-299161
Patent Document 2: Japanese Patent Application Laid-Open Publication No. 2011-033301

### SUMMARY OF INVENTION

### Technical Problem

In conventional method for preventing corrosion of metal component, corrosion of metal components in which steam and cooling water alternately contact cannot be sufficiently inhibited, so corrosion products accumulate on the metal surface with long-term use, causing heat transfer inhibition and resulting in decreased production volume and prolonged reaction time. In addition, periodic cleaning was necessary.

The present invention has an object to provide a method for preventing corrosion of metal component that is capable of sufficiently preventing corrosion of metal components in which steam and cooling water alternately contact.

### Solution to Problem

The method for preventing corrosion of metal component of the present invention is a method for preventing corrosion of a metal component in which cooling water and steam alternately contact, in which a phosphorus compound and/or a zinc compound is added to the cooling water and a corrosion-resistant film forming substance is added to the steam.

In one embodiment of the present invention, the metal component is a reaction vessel or a molding machine made of steel.

In one embodiment of the present invention, the phosphorus compound is at least one of hexametaphosphoric acid, tripolyphosphoric acid, orthophosphoric acid, phosphonobutanetricarboxylic acid, hydroxyethylidene diphosphonic acid (HEDP), and aminotrimethylphosphonic acid.

In one embodiment of the present invention, the corrosion-resistant film forming substance is an anodic inhibitor.

In one embodiment of the present invention, the corrosion-resistant film forming substance is a polyamine represented by a formula below.

R₁-[NH-(CH₂)ₘ]ₙ-NH₂... (1)

(in the formula, R₁ represents a saturated or unsaturated hydrocarbon group having 10 to 22 carbon atoms, m is an integer of 1 to 8, and n is an integer of 1 to 7. In a case where n is 2 or more, a plurality of NH-(CH₂)ₘ may be the same or different.)

In one embodiment of the present invention, a (meth)acrylic acid polymer is further added to the cooling water as a scale inhibitor.

In one embodiment of the present invention, a ratio A/B of an addition amount A of the scale inhibitor to an addition amount B of the corrosion-resistant film forming substance is 6 or less.

### Effects of Invention

In the method for preventing corrosion of metal component of the present invention, phosphorus compounds and/or zinc salts are added to cooling water, and corrosion-resistant film forming substances such as polyamines and/or sarcosinates are added to steam.

Thereby, an excellent corrosion prevention effect can be obtained even for metal components such as reaction vessels in which steam and cooling water alternately contact.

### DESCRIPTION OF THE EMBODIMENTS

The method for preventing corrosion of metal component of the present invention is a method for preventing corrosion of metal component in which cooling water and steam alternately contact, in which phosphorus compounds and/or zinc compounds are added to cooling water, and corrosion-resistant film forming substances are added to steam.

As the metal component, a steel component in which steam and cooling water alternately contact is suitable, and examples include reaction vessels and heating/cooling type molding machines. The metal component may be a carbon steel component, a stainless steel component, or the like. The temperature of steam is suitably about 150 to 200°C, and the temperature of cooling water is suitably about 10 to 40°C.

As the phosphorus compound added to cooling water, phosphoric acid or phosphates are suitable, and specifically, inorganic phosphoric acids (orthophosphoric acid, polyphosphoric acid) and salts thereof, organic phosphoric acids and salts thereof or esters thereof, and various phosphonic acids may be listed, and these may be used alone or in combination of two or more types. As salts, sodium salts, potassium salts, and the like are suitable.

As phosphoric acid and phosphates, hexametaphosphoric acid, tripolyphosphoric acid, orthophosphoric acid, phosphonobutanetricarboxylic acid (PBTC), hydroxyethylidene diphosphonic acid (HEDP), aminotrimethylphosphonic acid, and the like, or salts thereof are suitable.

The addition amount of the phosphorus compound is preferably 2.0 to 12.0 mg/L, particularly about 5.0 to 7.0 mg/L as PO₄.

As the zinc salt added to cooling water, zinc chloride, zinc sulfate, zinc nitrate, zinc acetate, zinc malate, zinc citrate, and the like are suitable, and these may be used alone or in combination of two or more types. The addition amount of the zinc salt is preferably 0.5 to 5.0 mg/L, particularly about 1.0 to 3.0 mg/L.

The corrosion-resistant film forming substance is preferably added directly to steam, but may be added to boiler water or the like.

As the corrosion-resistant film forming substance, anodic inhibitors are suitable, and specifically polyamines or sarcosinates, particularly polyamines are suitable.

Preferred polyamines are those represented by the following general formula (1).

R1-[NH-(CH2)ₘ]ₙ-NH2... (1)

(In the formula, R₁ represents a saturated or unsaturated hydrocarbon group having 10 to 22 carbon atoms, m is an integer of 1 to 8, and n is an integer of 1 to 7. In the case of n being 2 or more, multiple NH-(CH₂)ₘ may be the same or different.)

As the saturated or unsaturated hydrocarbon group of R₁, it may be linear, may have branches, or may be cyclic, and examples include alkyl groups, alkenyl groups, alkadienyl groups, alkynyl groups, and the like, but preferably linear alkyl groups and linear alkenyl groups, and the carbon number of R₁ is preferably 15 to 22.

m is an integer of 1 to 8, and preferably an integer of 2 to 6 from the viewpoint of corrosion inhibition. Examples of the (CH₂)ₘ group include methylene group, ethylene group (dimethylene group), propylene group (trimethylene group), or butylene group (tetramethylene group), but propylene group is preferred.

Also, n is preferably an integer of 1 to 3 from the viewpoint of corrosion inhibition.

Specific examples of such polyamines include dodecylaminomethyleneamine, dodecylaminodimethyleneamine, dodecylaminotrimethyleneamine (N-stearyl-1,3-propanediamine), and tetradecyl, hexadecyl and octadecyl compounds corresponding to these polyamines, octadecenylaminotrimethyleneamine, octadecenylamino-di-(trimethylamino)-trimethyleneamine, palmitylaminotrimethyleneamine, and the like, but N-oleyl-1,3-propanediamine (i.e., N-octadecenylpropane-3-diamine), which is readily available with sufficient purity, is preferred.

These polyamines may be dissolved in solvents such as methanol, ethanol, isopropanol, and the like and added to steam or feed water, but it is preferable to form an aqueous emulsion and add this to steam or boiler feed water.

Only one type of polyamine may be used, or two or more types may be used in combination.

Also, long-chain aliphatic amines such as octadecylamine and oleylamine may be used in combination within a range that does not cause clogging.

The above polyamine is preferably present at a ratio of 0.01 to 10 ppm, particularly 0.1 to 1 ppm, relative to the steam volume. In the case of the polyamine amount being too small compared to this range, the condensed water film formation inhibition effect and heating efficiency improvement effect by the polyamine cannot be sufficiently obtained, and in the case of being too large, there is a risk that sticky deposits may be generated in the system.

Moreover, "ppm" refers to the weight ratio of polyamine to water corresponding to the steam volume, and corresponds to "mg/L-water".

As sarcosinates, unsaturated and saturated C6 to C24 alkyl sarcosinates, particularly oleyl sarcosinate, tallow sarcosinate and mixtures thereof may be used.

In the present invention, a scale inhibitor may be added to the cooling water. As the scale inhibitor, a (meth)acrylic acid polymer is suitable. The (meth)acrylic acid polymer is preferably a copolymer containing (meth)acrylic acid and an unsaturated monomer having a sulfonic acid group, or a salt thereof. The polymer is preferably an AA/AMPS (acrylic acid/2-acrylamido-2-methylpropanesulfonic acid copolymer) polymer having a sulfone group, or an AA/HAPS (acrylic acid/hydroxyallyloxypropanesulfonic acid copolymer) polymer. The weight average molecular weight is preferably 4,000 to 30,000, more preferably 5,000 to 20,000. The AA/AMPS ratio and AA/HAPS ratio (molar ratio of monomers) are both preferably 60 to 95:40 to 5, more preferably 75 to 90:25 to 10. Moreover, it is preferable that the ratio A/B of the addition amount A (mg/L) of the scale inhibitor to the addition amount B (mg/L) of the corrosion-resistant film forming substance is 6 or less.

In the present invention, a tracer substance for the scale inhibitor may be further added to the cooling water.

Moreover, the method of the present invention is suitable for application in the case of the heating rate of the metal component being 10°C/hour or more.

In the present invention, it is preferable to start the above corrosion prevention method after removing rust from the metal component. By doing so, a corrosion-resistant film is easily formed on the metal surface, and the corrosion prevention effect can be improved.

In this case, after removing rust and before starting the corrosion prevention method, a high concentration of phosphorus compound or zinc compound (for example, total phosphoric acid concentration 70 to 120 mgPO₄/L, zinc concentration 10 to 30 mgZn/L) may be added to the water contacting the metal component. By doing so, a strong corrosion-resistant film may be formed on the metal surface in advance, and a high corrosion prevention effect is easily maintained for a long period. Furthermore, before starting the corrosion prevention method, the corrosion-resistant film forming substance may be added to form a corrosion-resistant film in advance.

Moreover, the removal of rust from the metal component, the addition of high concentration phosphorus compound or zinc compound, and the addition of corrosion-resistant film forming substance before starting the corrosion prevention method may be performed in a different order, or not performed respectively.

In the present invention, the concentration of the corrosion-resistant film forming substance in the cooling water may be proportionally controlled with respect to one or more of the temperature, electrical conductivity, pH, dispersant concentration, tracer substance concentration, and Langelier index of the cooling water in the heat exchanger through which the cooling water flows or at the heat exchanger outlet.

In the present invention, the calcium hardness of the cooling water in the heat exchanger may be calculated from the calcium hardness and electrical conductivity of the cooling tower makeup water and the electrical conductivity of the cooling water in the heat exchanger, and in the case of the calcium hardness being a predetermined concentration or less (for example, 30 mg/L or less), the concentration of the film forming substance in the cooling water in the heat exchanger may be controlled to be a predetermined concentration or more (for example, 0.1 mg/L or more). In cooling water, in the case of the calcium hardness having corrosion prevention effect being low and the corrosion prevention effect decreasing, the corrosion prevention effect can be improved by increasing the remaining film forming substance concentration.

In the present invention, corrosion-resistant film forming substance may be further added to the cooling water in batches. In cooling water, by adding film forming substance in addition to the film forming substance remaining from steam, the corrosion prevention effect can be improved.

Also, in the present invention, immediately before starting the temperature raising step of the metal component, film forming substance may be added in batches to the cooling water in the piping immediately before the metal component.

Also, in the present invention, in the case of the piping in the system being made of carbon steel, iron accumulation brought from the piping to the heat exchanger can be reduced, and heat transfer inhibition of the heat exchanger can be reduced.

### Examples

### [Corrosion Prevention Evaluation Tests 1 to 3 (Simulating Examples)]

### <Experimental Conditions>

### ≪Preparation of Test Water 1≫

Pure water (30°C) was placed in a 1L glass beaker, and calcium hardness and acid consumption (pH4.8) were each adjusted to 150 mg CaCO₃/L using sodium bicarbonate solution and calcium chloride solution. As a corrosion inhibitor, 6 mgPO₄/L of the phosphorus compound in Table 2 was added, 3 mgZn/L of zinc chloride was added as a zinc compound, and 10 mg/L of AA/AMPS polymer (monomer ratio 80:20, weight average molecular weight 20,000) was added as solid content as a scale inhibitor (Test Water 1 in Table 1: cooling water).

### ≪Preparation of Test Water 2≫

Test water (temperature 80°C) was prepared by diluting each component concentration to 1/5 using the same chemicals (Test Water 2 in Table 1: steam system). For Test Water 2, 0.3 mg/L of N-octadecenylpropane-1,3-diamine (OLDA) as a polyamine that is a film forming substance was added after the addition of the scale inhibitor.

### ≪Test Specimen≫

SPCC (50mm×30mm×1mm) was used as the test specimen.

### ≪Test Procedure≫

The test specimen was suspended on a copper wire coated with vinyl chloride and immersed in the test water 1. The beaker 1 containing test water 1 was placed in a constant temperature bath set at 30°C, and stirred for 20 hours while rotating a stirring bar at 250 rpm using a magnetic stirrer.

Thereafter, this test specimen was removed from beaker 1, transferred to beaker 2 containing test water 2 installed in a constant temperature bath set at 80°C, and stirred for 5 hours at 250 rpm using a magnetic stirrer.

After completion of the test, the test specimen was pulled up from beaker 2, corrosion products adhering to the surface of the test specimen were washed away with acid, then dried, and the weight was measured. The corrosion weight loss was calculated from the difference between the dry weight after the test and the weight before the test of the test specimen. The results are shown in Table 2.

### [Test Examples 4-6 (Simulating Comparative Examples)]

Tests were conducted in the same manner as Test Examples 1-3, except that the presence or absence and types of phosphorus compounds and zinc compounds in test waters 1 and 2, and the presence or absence of polyamine in test water 2 were as shown in Table 2, and corrosion weight loss was calculated. The results are shown in Table 2.

**[Table 1]**

| Table 1 Test Conditions | | |
|---|---|---|
| | Test water 1 | Test water 2 |
| pH at 25°C | 8.4 | 7.4 |
| M alkalinity (mg/L as CaCO₃) | 150 | 30 |
| Ca hardness (mg/L as CaCO₃) | 150 | 30 |
| Phosphorus compound (mgPO₄/L) | 6.0 | 1.2 |
| Zinc compound (mgZn/L) | 3.0 | 0.6 |
| AA/AMPS polymer (mg solid/L) | 10 | 2.0 |
| OLDA (mg/L) | 0 | 0.3 |
| Water temperature (°C) | 30 | 80 |
| Langelier index | 1.1 | -0.7 |
| Stirrer rotation speed (rpm) | 250 | 250 |
| Immersion time (h) | 20 | 5 |

**[Table 2]**

| Table 2 Corrosion Test Results | | | | |
|---|---|---|---|---|
| No. | Test water 1, 2 | | Test water 2 film forming substance | Corrosion weight loss (mg) |
| | Phosphorus compound | Zinc salt | | |
| Test Example 1 | Hexametaphosphoric acid | Zinc chloride | OLDA | 5.9 |
| Test Example 2 | HEDP | Zinc chloride | OLDA | 7.1 |
| Test Example 3 | Hexametaphosphoric acid + HEDP 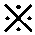 | Zinc chloride | OLDA | 4.0 |
| Test Example 4 | None | None | - | 24.5 |
| Test Example 5 | None | None | OLDA | 22.9 |
| Test Example 6 | Hexametaphosphoric acid + HEDP 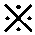 | Zinc chloride | - | 15.1 |

| | | | | |
|---|---|---|---|---|
| 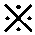 Hexametaphosphoric acid: HEDP (hydroxyethylidene diphosphonic acid) = 1:1 | | | | |

### <Results and Discussion>

As shown in Table 2, in test examples 1 to 3 where phosphorus compound, zinc salt, and polyamine were used in combination, sufficient corrosion inhibition effects were obtained even under low corrosion inhibitor concentration and high temperature environment conditions, indicating that they can contribute to maintaining heat transfer efficiency of heat exchangers and equipment maintenance.

### [Residual Property Evaluation Test of Corrosion-Resistant Film Forming Substance in Case of Combined Use of Corrosion-Resistant Film Forming Substance and Scale Inhibitor]

1000 mL of room temperature pure water was placed in a 1 L glass beaker, 0.3 mg/L of N-octadecenylpropane-1,3-diamine (OLDA) as a corrosion-resistant film forming substance was added, and AA/AMPS polymer (monomer ratio 80:20, weight average molecular weight 20,000) as a scale inhibitor was added to achieve the concentrations listed in Table 3, followed by stirring for 30 min to prepare test waters 1 to 6.

After each test water 1 to 6 was allowed to stand for 30 min, the residual OLDA concentration in the supernatant water was measured. Analysis of OLDA concentration was performed by the Bengal Rose method described in Power Plant Chemistry 2015, 17(1). The results are shown in Table 3.

**[Table 3]**

| Table 3 Concentration Analysis Results | | | | |
|---|---|---|---|---|
| Test No. | AA/AMPS concentration (mg/L) | OLDA concentration (mg/L) | Addition amount ratio ([AA/AMPS]/[OLDA]) | Residual OLDA concentration (mg/L) |
| 1 | 0 | 0.3 | 0 | 0.32 |
| 2 | 0.3 | 0.3 | 1.0 | 0.19 |
| 3 | 0.5 | 0.3 | 1.7 | 0.13 |
| 4 | 1 | 0.3 | 3.3 | 0,05 |
| 5 | 2 | 0.3 | 6.7 | 0.02 |
| 6 | 3 | 0.3 | 10.0 | 0 |

### <Results and Discussion>

As shown in Table 3, in the case of combined use of OLDA and AA/AMPS polymer, OLDA and AA/AMPS polymer co-precipitate, and the OLDA concentration decreases. By setting the [AA/AMPS]/[OLDA] value to 6 or less, particularly 3 or less, it was inferred that the OLDA concentration remaining in cooling water becomes high, and the corrosion prevention effect is improved.

Although the present invention has been described in detail using specific embodiments, it will be apparent to those skilled in the art that various modifications are possible without departing from the intent and scope of the present invention.

This application is based on Japanese Patent Application No. 2023-091035 filed on June 1, 2023, which is incorporated herein by reference in its entirety.

## Claims

1. A method for preventing corrosion of metal component, which is a method for preventing corrosion of a metal component in which cooling water and steam alternately contact, wherein a phosphorus compound and/or a zinc compound is added to the cooling water and a corrosion-resistant film forming substance is added to the steam.

2. The method for preventing corrosion of metal component according to claim 1, wherein the metal component is a reaction vessel or a molding machine made of steel.

3. The method for preventing corrosion of metal component according to claim 1, wherein the phosphorus compound is at least one of hexametaphosphoric acid, tripolyphosphoric acid, orthophosphoric acid, phosphonobutanetricarboxylic acid, hydroxyethylidene diphosphonic acid (HEDP), and aminotrimethylphosphonic acid.

4. The method for preventing corrosion of metal component according to claim 1, wherein the corrosion-resistant film forming substance is an anodic inhibitor.

5. The method for preventing corrosion of metal component according to claim 1, wherein the corrosion-resistant film forming substance is a polyamine represented by a formula below:
R₁-[NH-(CH₂)ₘ]ₙ-NH₂ ... (1)
(wherein R₁ represents a saturated or unsaturated hydrocarbon group having 10 to 22 carbon atoms, m is an integer of 1 to 8, and n is an integer of 1 to 7; in a case where n is 2 or more, a plurality of NH-(CH₂)ₘ may be same or different).

6. The method for preventing corrosion of metal component according to claim 1, wherein the phosphorus compound and the zinc compound are added to the cooling water.

7. The method for preventing corrosion of metal component according to claim 6, wherein 2.0 to 12.0 mg/L of the phosphorus compound is added as PO₄, and 0.5 to 5.0 mg/L of a zinc salt is added as the zinc compound.

8. The method for preventing corrosion of metal component according to any one of claims 1 to 7, wherein a (meth)acrylic acid polymer is further added to the cooling water as a scale inhibitor.

9. The method for preventing corrosion of metal component according to claim 8, wherein a ratio A/B of an addition amount A of the scale inhibitor to an addition amount B of the corrosion-resistant film forming substance is 6 or less.
